Europäisches Patentamt

European Patent Office

Office européen des brevets

(19)

(11) Veröffentlichungsnummer: **0 001 634**
**B1**

(12) **EUROPÄISCHE PATENTSCHRIFT**

(45) Veröffentlichungstag der Patentschrift: **29.07.81**

(51) Int. Cl.³: **F 16 H 55/30**

(21) Anmeldenummer: **78101170.5**

(22) Anmeldetag: **18.10.78**

(54) Kettenrolle für Rundgliederketten mit Segmenten als Kettenauflage.

(30) Priorität: **20.10.77 DE 2747070**

(43) Veröffentlichungstag der Anmeldung:
**02.05.79 Patentblatt 79/9**

(45) Bekanntmachung des Hinweises auf die Patenterteilung:
**29.07.81 Patentblatt 81/30**

(84) Benannte Vertragsstaaten:
**BE CH FR GB LU NL SE**

(56) Entgegenhaltungen:
**DE - A - 1 575 573**
**DE - B - 1 039 807**
**DE - B - 1 211 036**
**GB - A - 901 249**
**US - A - 2 101 685**
**US - A - 3 016 757**

(73) Patentinhaber: **Kettenwerk Wickede-Ruhr**
**Hermann Koch**
**D-5757 Wickede-Ruhr (DE)**

(72) Erfinder: **Schröder, Rudolf**
**Bergstrasse 23**
**D-5757 Wickede-Ruhr (DE)**

(74) Vertreter: **Fritz, Herbert, Dipl.-Ing.**
**Mühlenberg 74**
**D-5760 Arnsberg 1 (DE)**

Courier Press, Leamington Spa, England.

Kettenrolle für Rundgliederketten mit Segmenten als Kettenauflage

Die Erfindung bezieht sich auf eine Kettenrolle für Rundgliederketten mit Segmenten als Kettenauflage, bei welcher die Segmente an jeder Seite eines Kranzes eines Rollenkörpers paarweise mit achsparallelen Bolzen fest angebracht sind und ein metallischer Segmentteil sich an einer zylindrischen Fläche des Kranzes abstützt.

Wenn eine Kettenrolle dieser Art eine Rundgliederkette aufnimmt, dann werden die liegenden Kettenglieder von den Stirnflächen der Segmente aufgenommen, die entweder glatt oder den Kettengliedern in der Form angepaßt ausgebildet sein können. Die stehenden Kettenglieder werden frei von dem Zwischenraum eines Segmentpaares aufgenommen.

Die Segmente von bekannten Kettenrollen der gleichen Art bestehen vollständig aus Metall. Beim Betrieb entstehen Geräusche durch das Aufschlagen der Metallketten auf den metallischen Flächen der Segmente. Diese Geräusche pflanzen sich von den Segmenten auf den Rollkörper fort an dem die Segmente angebracht sind. Bei angetriebenen Kettenrollen, deren Segmente eine glatte Oberfläche aufweisen, wird das übertragene Drehmoment durch den Reibungsschluß zwischen Eisen und Eisen bestimmt.

Bei einer bekannten Kettennrolle für Rundgliederketten (Gb—A 901 249) wird der Reibungsschluß dadurch verbessert und die Geräuschentwicklung dadurch vermindert, daß als Auflage für die liegenden Kettenglieder zwei Ringscheiben aus einem nachgiebigen Werkstoff vorgesehen sind. Es handelt sich dabei jedoch um eine Kettenrolle einer etwas anderen Art als die Erfindung, weil die Ringscheiben aus nachgiebigem Werkstoff und die für ihre Befestigung vorgesehenen außen angelegten Ringscheiben aus Metall nicht in Segmente aufgeteilt sind sondern sich über den gesamten Kreisumfang erstrecken. Im übrigen werden beim Umlauf der Kette die gesamten Querschnitte der massiven elastischen Ringscheiben verformt.

Die Aufgabe der Erfindung besteht darin, bei einer Kettenrolle der eingangs genannten Art die Geräuschentwicklung zu verringern und die Übertragung größerer Drehmomente auf die Kette zu ermöglichen.

Diese Aufgabe wird durch eine Kettenrolle mit den Merkmalen des Patentanspruches 1 gelöst, wobei alternativ oder bevorzugt die Merkmale der Unteransprüche hinzu kommen.

Dadurch, daß bei einer Kettenrolle nach der Erfindung jedes Kettenglied von einer ausreichend stark bemessenen Schicht aus Kunststoff aufgenommen wird, entstehen keine lauten Aufschlaggeräusche wie es bei Segmenten, die vollständig aus Metall bestehen, der Fall ist. Die erhöhte Momentenübertragung bei zylindrischen Auflageflächen ergibt sich durch den Reibungswert, der zwischen Kunststoff und Metall größer ist als zwischen Metall und Metall. Außerdem entsteht an den zylindrischen Flächen aus Kunststoff ein formschluß zwischen Kettenrolle und den Kettengliedern, die unter Druck aufliegen, den Kunststoff elastisch verformen und ihn zu einer Anpassung zwingen.

An jedem Segment ist ein metallischer Kern vorgesehen, der allseitig von einem Mantel aus Kunststoff umgeben ist. Auch die Flächen, mit denen jedes Segment am Kranz des Rollenkörpers anliegt, sind zum überwiegenden Teil aus Kunststoff, also schallschluckend. Außerdem sind die Segmente an ihren Stirnflächen, wo sie an anderen Segmenten anliegen, mit Kunststoff überzogen. Die mechanische Festigkeit der Verbindung der Segmente mit dem Rollenkörper ist durch die metallische Anlagefläche gewährleistet. Jedes Segment liegt im Bereich der Bohrungen mit metallischen Ringscheiben am Kranz an. Außerdem stützt sich der metallische Kern mit einer Bodenfläche an einer zylindrischen Fläche des Kranzes ab. Auch ist eine metallische Anlage des Kopfes eines jeden Gewindebolzens bzw. der zugeordneten Mutter eine Ausnehmung im Kunststoff vorgesehen. Der Querschnitt eines jeden Segmentes ist durch den Metallkern stabilisiert und dabei die Verformung auf den Auflageteil, also den oberen Bereich des Segmentquerschnittes beschränkt.

Für die Gestaltung des Auflageteiles des Kunststoffmantels gibt es gemäß der weiteren Erfindung verschiedene Möglichkeiten. Die Auflageflächen können zylindrisch ausgebildet sein mit oder ohne einen seitlichen Rand; es lassen sich aber auch Mulden oder Taschen zur Aufnahme liegender Kettenglieder bilden.

Durch innenseitig am Kern angegossene oder angeschweißte Stege kann man gemäß der weiteren Erfindung (Anspruch 4) ein zusätzliche Abstützung der Segmente an der äußeren zylindrischen Fläche des Rollenkranzes erhalten.

Ein Ausführungsbeispiel der Erfindung wird im folgenden näher beschrieben unter Bezugnahme auf die beiliegenden Zeichnungen. Es zeigen:

Fig. 1 eine Ansicht eines Quadranten einer Kettenrolle nach der Erfindung in Achsrichtung gesehen.

Fig. 2 ist ein Schnitt entsprechend II in Fig. 1.

Fig. 3 zeigt einen Schnitt durch ein Segment entsprechend III auf Fig. 1 im größeren Maßstab.

Am Kranz eines einheitlichen Rollenkörpers 10 aus Stahl oder Gußstahl sind beidseitig über den gesamten Umfang Segmente 20 befestigt, durch welche im Querschnitt zwei zylindrische Auflageflächen für die liegenden Kettenglieder gebildet sind. Jedes Segment erstreckt sich über einen Winkel von 45°, so daß die gesamte Kettenrolle 16 Segmente insgesamt aufweist. Dieser Winkel und die Stückzahl der Segmente bezieht sich auf die gezeichnete Ausführung. Bei größeren oder kleineren Segment-Kettenrollen ändern sich selbstverständlich die Winkel und die Anzahl der Segmente. Die Segmente sind paarweise nebeneinander mittels zweier Gewindebolzen 14 am Kranz des Rollenkörpers 10 befestigt. Jedes Segment liegt dabei an einer seitlichen zylindrischen Fläche 11 und an einer seitlichen ebenen Fläche 12 des Kranzes des Rollenkörpers an. Außerdem ist jedes Segment mittels zweier angeformter Stege 24 an einer mittigen zylindrischen Fläche 13 des Kranzes abgestützt.

Durch die Segmente sind im Querschnitt je zwei zylindrische Auflageflächen 26 gebildet, auf denen sich beim Umlauf die liegenden Kettenglieder (27) abstützen. Die stehenden Kettenglieder werden zum Teil frei vom Zwischenraum zwischen den Segmenten aufgenommen. Die liegenden Kettenglieder können mit einem seitlichen Rand (Bordrand) 26a ausgebildet sein.

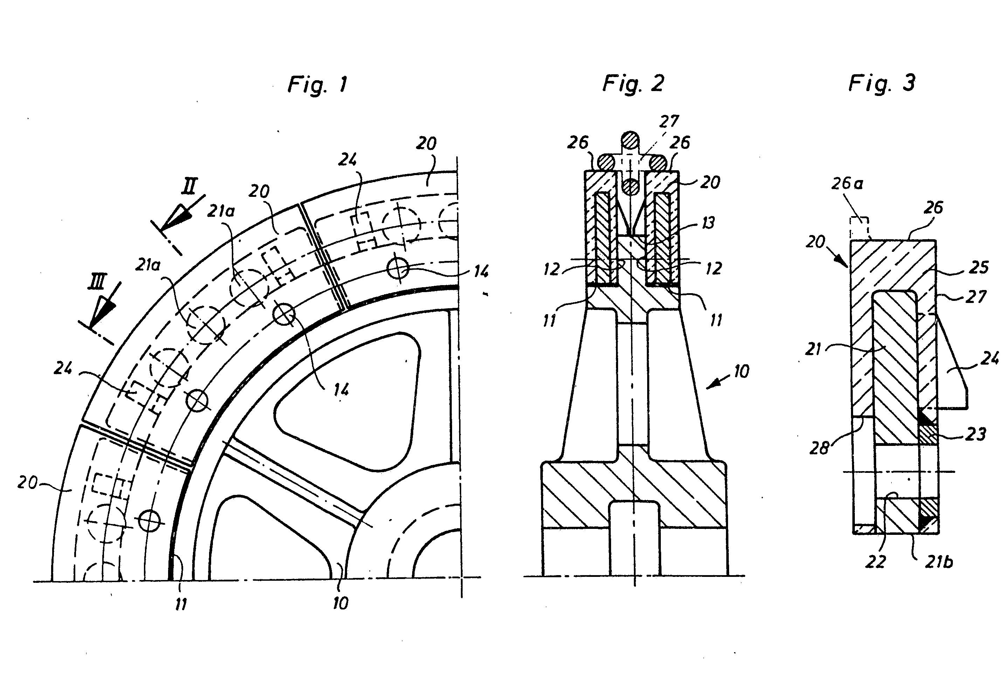

Der Aufbau eines jeden Segmentes ist aus Fig. 3 erkennbar. Es ist ein Metallkern 21 vorgesehen aus Stahl, Stahlguß, Grauguß oder aus einem anderen Metall mit der entsprechenden mechanischen Festigkeit. An einer Seite des Kerns 21 sind zwei Stege 24 angeschweißt. Außerdem sind zwei Bohrungen 22 gebildet zur Aufnahme der Gewindebolzen für die Befestigung. diese Bohrungen werden an der Seite, an der auch die Stege angeschweißt sind, durch dort angeschweißte Ringscheiben 23 verlängert.

Im übrigen ist der kern an allen Seiten und oben, auch an den Stirnseiten durch einen Mantel aus einem hartgummiartigen Kunststoff umgeben. Durch diesen Mantel ist insbesondere ein Auflageteil 25 gebildet, dessen Stärke nahezu gleichgroß wie die Segmentbreite ist und wo eine zylindrische Fläche 26 als Auflagefläche für die Kettenglieder gebildet ist. Außenseitig ist im Mantel eine Ausnehmung 28 gebildet, die zur Aufnahme eines Kopfes bzw. einer Mutter des Gewindebolzens dient.

Durch Ausnehmung (21a) im Metallkern, die vom Kunststoff ausgefüllt sind, wird eine formschlüssige Verbindung zwischen Kern und Mantel erreicht.

Wenn die Segmente fest am Kranz des Rollenkörpers angebracht sind, dann liegt eine Bodenfläche 21b des Metallkerns, sowie beidseitige durch den Kunststoffmantel gebildete Flächen an der zylindrischen Fläche 11 des Kranzes an. Außerdem liegen an der ebenen Fläche 12 des Kranzes die metallische Ringscheibe 3 sowie entsprechende ebene Flöchen des Kunststoffmantels an. Die Stege 24 stützen sich dabei auf der zylindrischen Fläche 13 des Kranzes ab.

## Patentansprüche

1. Kettenrolle für Rundgliederketten mit Segmenten (20) als Kettenauflage, mit folgenden Merkmalen:
—die Segmente (20) sind an jeder Seite eines Kranzes eines Rollenkörpers (10) paarweise mit achsparallelen Bolzen (14) fest angebracht
—ein metallischer Segmentteil stützt sich an einer zylindrischen Fläche des Kranzes ab
gekennzeichnet durch die nachfolgend genannten weiteren Merkmale:
—die Segmente (20) bestehen aus einem Metallkern (21) und einem Mantel aus hartgummiartigem Kunststoff, der den Metallkern (21) an allen Seiten umgibt und kettenseitig ein Auflageteil (25) bildet
—Metallkern (21) und Kunststoffmantel sind mittels Ausnehmungen (21a), die am Metallkern (21) gebildet und vom Kunststoff ausgefüllt sind, formschlüssig verbunden
—am Metallkern (21) sind Bohrungen (22) zur Aufnahme der Bolzen (14) vorgesehen, die innenseitig angegossene oder angeschweißte Ringscheiben (23) fortgesetzt sind
—am Kunstoffmantel sind im Bereich der Bohrungen (22) außenseitig Ausnehmungen (28) gebildet.

2. Kettenrolle nach Anspruch 1 dadurch gekennzeichnet, daß durch das Auflageteil (25) des Kunststoffmantels eine zylindrische Auflagefläche (26) für liegende Kettenglieder (27) mit oder ohne einen seitlichen Rand (26a) gebildet ist.

3. Kettenrolle nach Anspruch 1 dadurch gekennzeichnet, daß am Auflageteil (25) Mulden oder Taschen zur Aufnahme liegender Kettenglieder gebildet sind.

4. Kettenrolle nach Anspruch 1 dadurch gekennzeichnet, daß am Kern innenseitig Stege (24) angegossen oder angeschweißt sind, die sich am Kranz des Rollenkörpers (10) abstützen.

## Claims

1. A chain pulley or roller for round-link chain having sections (20) as chain support, having the following features:
—the sections (20) are securely mounted in pairs on either side of a rim of a roller body (10) by means of axially parallel bolts or pins (14)
—a metal section part is supported against a cylindrical surface of the rim
characterised by the subsequently mentioned further features:
—the sections (20) comprise a metal core (21) and a jacket of vulcanite-like plastics material, which jacket encloses the metal core (21) on all sides and forms an abutment portion (25) on the chain side.

—the metal core (21) and plastics material jacket are connected in form-locking manner by means of recesses (21a) formed in the metal cores (21) and filled with the plastics material

—the metal cores (21) has bores (22) formed therein for receiving the pins (14) which bores are continued inwardly by ring discs (23) moulded or welded thereon

—the plastics material jacket in the region of the bores (22) on the outside has recesses (28) formed therein.

2. A chain roller according to claim 1, characterised by the feature that the support portion (25) of the plastics material jacket forms a cylindrical supporting surface (26) for horizontal chain links (27) either with or without a lateral rim (26a).

3. A chain roller according to claim 1, characterised by the feature that in support portion (25) hollows or pockets are formed to receive horizontal chain links.

4. A chain roller according to claim 1, characterised by the feature that inwardly the core has ribs (24) moulded or welded thereon, which are supported on the rim of the roller body (10).

**Revendications**

1. Roue à chaîne pour chaîne à maillons ronds pourvues de segments (20) supportant la chaîne présentant les particularités suivantes:
—les segments (20) sont montés de chaque côté d'une couronne d'un corps de roue (10) par paires en étant fixés au moyen de boulons (14) dont les axes sont parallèles
—une partie de segment métallique prend appui sur une surface cylindrique de la couronne, caractérisée par les particularités supplémentaires suivantes;
—les segments (20) se composent d'un noyau métallique (21) et d'une enveloppe en matière plastique du type caoutchouc dur qui entoure de toutes parts le noyau métallique (21) et côté chaîne forme une partie de support (25),
—le noyau métallique (21) et l'enveloppe en matière plastique sont reliés entre eux par complémentarité de forme au moyen d'évidements (21a) qui sont formés sur le noyau métallique (21) et remplis de matière plastique,
—sur le noyau métallique (21) sont prévues des forures (22) pour la réception des boulons (14) qui se prolongent du côté intérieur par des bagues (23) venues de coulée ou appliquées par soudage,
—l'enveloppe en matière plastique présente à proximité des forures (22), du côté extérieur, des évidements (28).

2. Roue à chaîne suivant la revendication 1, caractérisée en ce que la partie du support (25) de l'enveloppe en matière plastique forme une surface d'appui (26) pour un maillon de chaîne (27) en appui avec ou sans bord latéral (26a).

3. Roue à chaîne suivant la revendication 1, caractérisée en ce que sur la partie du support (25) sont formées des cavités ou des poches pour la réception des maillons de chaîne qui s'y trouvent.

4. Roue à chaîne suivant la revendication 1, caractérisée en ce que le noyau comporte des saillies (24) tournées vers l'intérieur, venues de coulée ou appliquées par soudage et qui prennent appui sur la couronne du corps de la roue (10).

*Fig. 1*

*Fig. 2*

*Fig. 3*

0 001 634